# EUROPEAN PATENT SPECIFICATION

(11) **EP 0 328 136 B1**
(45) Date of publication and mention of the grant of the patent: **03.05.1995**
(21) Application number: 89102341.8
(22) Date of filing: 10.02.1989
(51) Int. Cl.: G01S 17/46, G01S 7/48

(54) **Distance measuring apparatus**
Abstandsmessgerät
Dispositif de mesure de distance

(30) Priority: 12.02.1988 JP 31515/88; 15.02.1988 JP 32182/88
(43) Date of publication of application: 16.08.1989
(73) Proprietor: OMRON TATEISI ELECTRONICS CO., Kyoto-shi Kyoto-fu (JP)
(72) Inventor: Nakanishi, Hiroaki c/o Omron, Shimokaiinji Nagaokakyo-shi Kyoto 617 (JP); Fukumoto, Hidehiro c/o Omron, Shimokaiinji Nagaokakyo-shi Kyoto 617 (JP); Shibata, Kuniharu c/o Omron, Shimokaiinji Nagaokakyo-shi Kyoto 617 (JP); Matsumoto, Hidetoshi c/o Omron, Shimokaiinji Nagaokakyo-shi Kyoto 617 (JP)
(74) Representative: WILHELMS, KILIAN & PARTNER Patentanwälte

(56) References cited:
- EP-A- 0 140 650
- US-A- 4 429 967
- PATENT ABSTRACTS OF JAPAN, vol. 9, no. 329 (P-416)[2052], 24th December 1985;& JP-A-60 154 176
- PATENT ABSTRACTS OF JAPAN, vol. 6, no 116 (P-125), 29th June 1982;& JP-A-57 44 809

## Description

The present invention relates to a distance measuring apparatus for optically accurately measuring the distance to an object to be detected by a triangulation method and, more particularly, to a distance measuring apparatus in which a light amount of the reflected light is held to a predetermined level.

Hitherto, for instance, as shown in JP-A-57-44809, a distance measuring apparatus with use of the triangulation method as shown in Fig. 17 has been known as an apparatus to detect the distance to an object. According to such an apparatus, a light emitted from a light projecting device 1 such as a light emitting diode or the like is converted into a parallel light beam 3 by using a collimating lens 2. The light beam 3 is projected in the direction to detect a distance. A condenser lens 5 is provided to detect the light reflected from an object 4 existing at a position which is away from the lens 2 by a certain distance. A position sensitive device (hereinafter, abbreviated to a PSD) 6 to output currents from both ends on the basis of the light detecting positions is arranged behind the condenser lens 5. When the object 4 interrupts the light beam 3 at a position within a predetermined distance range from the front surface of the lens 2, the diffused reflected light from the object 4 is converged by the condenser lens 5 and impinges on the PSD 6. Therefore, the position of the reflected light which has impinged onto the PSD 6 changes depending on the distance from the lens 2 to the object 4 to be detected. A power source 7 to bias is connected to the PSD 6 and two analog current outputs corresponding to the light impinging positions are generated from both ends of the PSD 6. The output signals are input to I/V (current to voltage) converters 8 and 9, respectively. The I/V converters 8 and 9 convert the current outputs from the PSD 6 into voltage signals and supply them to a subtracting circuit 10 and an adding circuit 11. A dividing circuit 12 divides an output of the subtracting circuit 10 by an output of the adding circuit 11, thereby outputting a normalized signal corresponding to the light detecting position irrespective of the sum of the light detection amounts. The output signal is input to, e.g., a comparing circuit 13. The comparing circuit 13 detects a signal exceeding a predetermined threshold level and gives a detection signal to a signal processing circuit 14. The light projecting device 1 is lit on through a light projecting device drive circuit 16 by a pulse output of a pulse oscillator 15. The output of the pulse oscillator 15 is also given to the signal processing circuit 14. When a detection signal is input for a pulse oscillating period, the signal processing circuit 14 outputs the detection signal to the outside through an output circuit 17.

According to such a conventional distance measuring apparatus, the position detection signal is obtained by dividing the output of the subtracting circuit by the output of the adding circuit by means of the dividing circuit. Therefore, there is a drawback such that its error amount largely changes in dependence on the light amount level. That is, although an accurate position detection signal is derived if the light amount level is sufficiently large, if the amount of light which enters the PSD 6 is small, the position detection signal largely changes due to a slight fluctuation of the output difference of the I/V converters 8 and 9. Therefore, there is a drawback such that the measuring accuracy varies with the light amount. If the gains of the I/V converters 8 and 9 to convert the light detection current signals into voltage signals are raised to increase the input level of the dividing circuit, when an object exists at a close position and the light sensitive level rises, the input level is saturated and the accurate division output cannot be derived. Therefore, there is a problem such that the fluctuation of the input level of the dividing circuit is large and errors easily occur.

On the other hand, since the fluctuation of the input level of the dividing circuit is large, there is a problem such that errors easily occur unless a dividing circuit of a wide dynamic range and a high response speed is used.

Further, in the case of constructing the dividing circuit by using a log amplifier, both inputs are limited to the inputs having the same sign. Therefore, an object can be detected only in the half region of the PSD 6 such that the difference between the outputs of the I/V converters 8 and 9 is always positive. There is a drawback such that the use efficiency of the PSD 6 is low and its resolution deteriorates.

A distance measuring apparatus according to the preamble of claim 1 is known from EP-A-0 140 650.

It is an object of the present invention that the position of an object can be accurately detected while keeping the light detection amount of the position sensitive device to a predetermined level and that even when the reflected light amount from the object is large, the light detection amount can be certainly held to a predetermined level.

Another object of the invention is that by keeping the light detection amount of the position sensitive device to a predetermined level, the position of an object can be accurately detected without requiring the high response speed to a dividing circuit.

Still another object of the invention is that a change in light detection amount of a position sensitive device is reduced irrespective of the surface state or position of an object and the position of an object can be accurately detected on the basis of a ratio of two output currents of the position sensitive device.

A distance measuring apparatus according to the present invention is defined by claim 1.

According to the invention, the light projection pulse signal is the output whose level gradually increases. The reflected light amount also gradually increases and the light detection signal which increases with an elapse of time is obtained. Therefore, for an object in which the reflected light amount is large, the outputs which are obtained from the position sensitive device reach the threshold level of the comparing means in a short time. Since the light projection is stopped in a short time after the start of the light projection while the change amount is relatively small, there is hardly a time delay of the stop of the light emission. The light projection is stopped before the saturation of the dividing circuit and the position of the object is detected.

Therefore, even if a signal in which the peak value of the light projection pulse signal is large is used, the fluctuation of the light sensitive level can be suppressed to a small value and the efficiency of the light projection control means can be improved. Therefore, the input signal which is given to the dividing circuit which is used in the position signal detecting means is not saturated and one of the two inputs of the dividing circuit is held to almost a predetermined value. Thus, its error amount can be reduced and the distance to an object can be detected.

In the drawings:
Fig. 1 is a block diagram showing a construction of a distance measuring apparatus according to the first embodiment of the present invention;
Fig. 2 is a circuit diagram showing a detailed construction of a light projection control circuit and its peripheral circuits in the first embodiment;
Figs. 3a to 3g are waveform diagrams showing a waveform in each section in the embodiment;
Figs. 4a and 4b are waveform diagrams showing another example of the signal waveforms;
Fig. 5 is a block diagram showing a construction of a distance measuring apparatus according to the second embodiment of the invention;
Fig. 6 is a circuit diagram showing a detailed construction of a light projection control circuit and its peripheral circuits in the second embodiment;
Figs. 7a to 7h are waveform diagrams showing a waveform in each section in the second embodiment;
Figs. 8a to 8d are waveform diagrams showing the relation between the light projection pulse and the light detection signal;
Fig. 9 is a circuit diagram showing a detailed construction of a light projection control circuit and its peripheral circuits in the third embodiment of the invention;
Figs. 10a to 10h are waveform diagrams showing a waveform in each section in the third embodiment;
Fig. 11 is a circuit diagram showing a detailed construction of a light projection control circuit and its peripheral circuits in the fourth embodiment;
Figs. 12a to 12h are waveform diagrams showing a waveform in each section in the fourth embodiment;
Fig. 13 is a block diagram showing a construction of a distance measuring apparatus according to the fifth embodiment of the invention;
Fig. 14 is a circuit diagram showing a detailed construction of a light projection control circuit and its peripheral circuits in the fifth embodiment;
Figs. 15a to 15f are waveform diagrams showing a waveform in each section in the fifth embodiment;
Fig. 16 is a block diagram showing a whole constitution of a distance measuring apparatus according to the sixth embodiment of the invention; and
Fig. 17 is a block diagram showing an example of a conventional distance measuring apparatus.

### DETAILED DESCRIPTION OF PREFERRED EMBODIMENTS

### FIRST EMBODIMENT

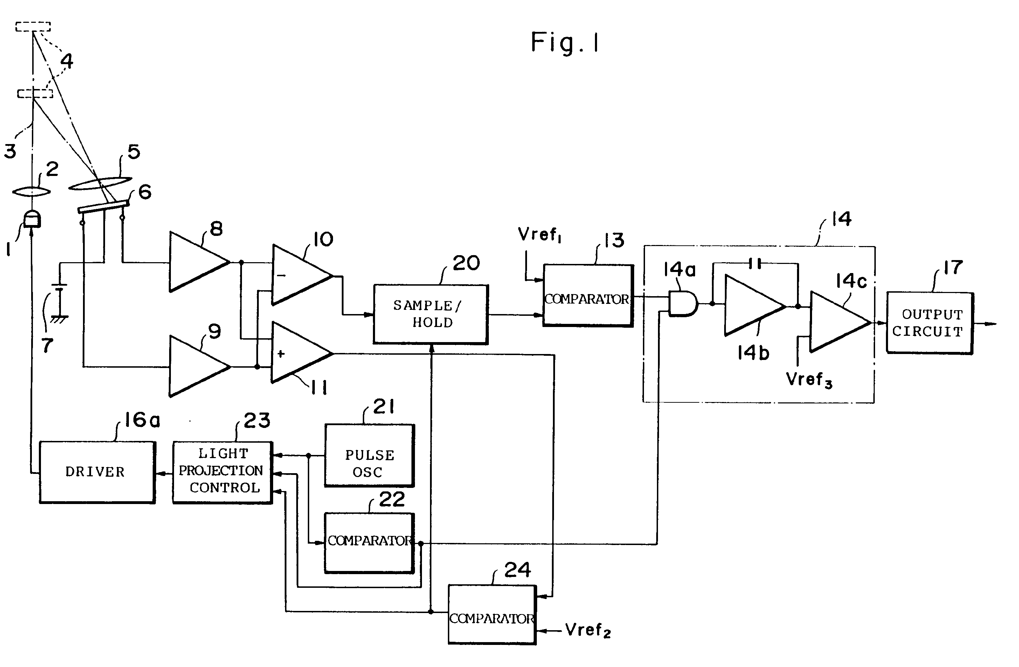

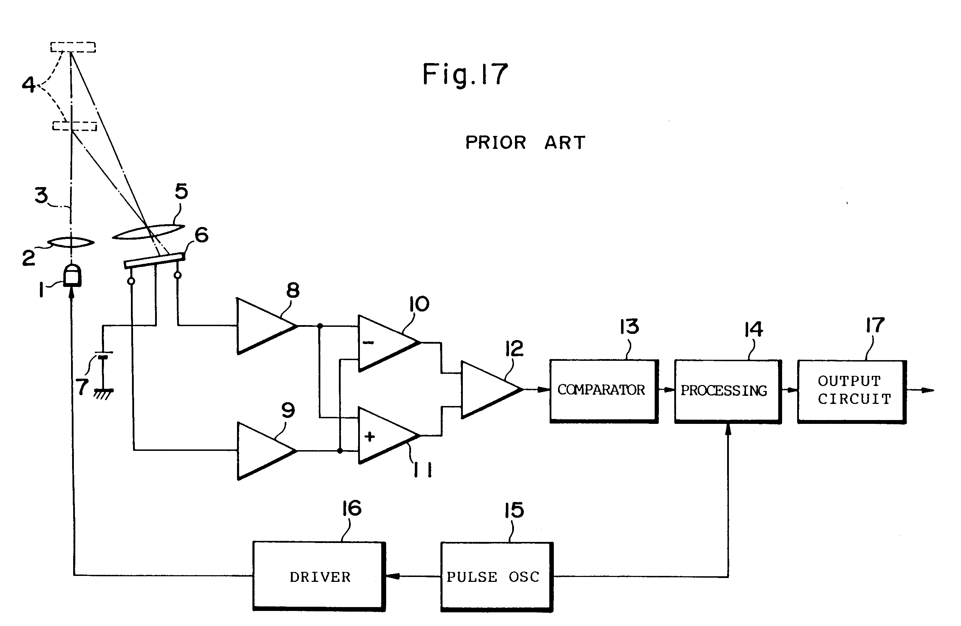

Fig. 1 is a block diagram showing a construction of the first embodiment of a distance measuring apparatus according to the present invention. In Fig. 1, the same parts and components as those in the conventional apparatus shown in Fig. 17 are designated by the same reference numerals. In the first embodiment, the light emitted from the light projecting device 1 is also converted into the parallel light beam 3 by using the collimating lens 2. The light beam 3 is projected in the direction to detect a distance to an object to be detected. The condenser lens 5 to detect the reflected light from the object is arranged at a position which is away from the collimating lens 2 by a predetermined distance. The one-dimensional position sensitive device 6 is arranged behind the condenser lens 5. The power source 7 to bias is connected to a common electrode of the position sensitive device (PSD) 6. Two analog currents are output from terminals at both ends of the PSD 6 in correspondence to the light impinging positions. The current outputs of the PSD 6 are given to the I/V converters 8 and 9, respectively. The I/V converters 8 and 9 convert the current outputs derived from both ends of the PSD 6 into the voltage signals and give them to the subtracting circuit 10 and adding circuit 11, respectively. The output of the subtracting circuit 10 is input to the comparing circuit 13 through a sample and hold (S/H) circuit 20. A predetermined level V_{ref1} corresponding to a distance to be detected in a distance measuring range is set in the comparing circuit 13. When a signal of a level exceeding the predetermined level V_{ref1} is input, the comparing circuit 13 gives an object detection signal to the signal processing circuit 14.

The distance measuring apparatus in the embodiment has a pulse oscillator 21 to intermittently generate a trapezoidal signal. An output signal of the pulse oscillator 21 is input to a comparing circuit 22 and a light projection control circuit 23. The output of the adding circuit 11 is given to a comparing circuit 24. A predetermined threshold level V_{ref2} is set to the comparing circuit 24. Only when the addition output of the adding circuit 11 exceeds the predetermined level V_{ref2}, the comparing circuit 24 outputs a control signal to the light projection control circuit 23. The light projection control circuit 23 constructs light projection control means for directly transferring the output of the pulse oscillator 21 to a light projection device drive circuit 16a until the signal is input from the comparing circuit 24. The drive circuit 16a intermittently drives the light projecting device 1. The drive circuit 16a, light projecting device 1, and collimating lens 2 construct a light projecting section to project the parallel light beam toward a detecting region. The comparing circuit 22 converts the trapezoidal output signal of the oscillator 21 into the square wave signal and its output is input to the signal processing circuit 14 and light projection control circuit 23. The signal processing circuit 14 has: a gate circuit 14a for allowing the output of the comparing circuit 13 to pass by using the square wave output of the comparing circuit 22 as a gate control signal; an integrating circuit 14b to integrate an output of the gate circuit 14a by a predetermined time constant; and a comparing circuit 14c to discriminate an output of the integrating circuit 14b by a predetermined threshold level V_{ref3}. When the detection signal is continuously obtained from the comparing circuit 13 a plurality of times, the signal processing circuit 14 gives an object detection signal to the output circuit 17. The output circuit 17 outputs the detection signal to the outside as an output signal such as a relay contact output, an open collector output, or the like.

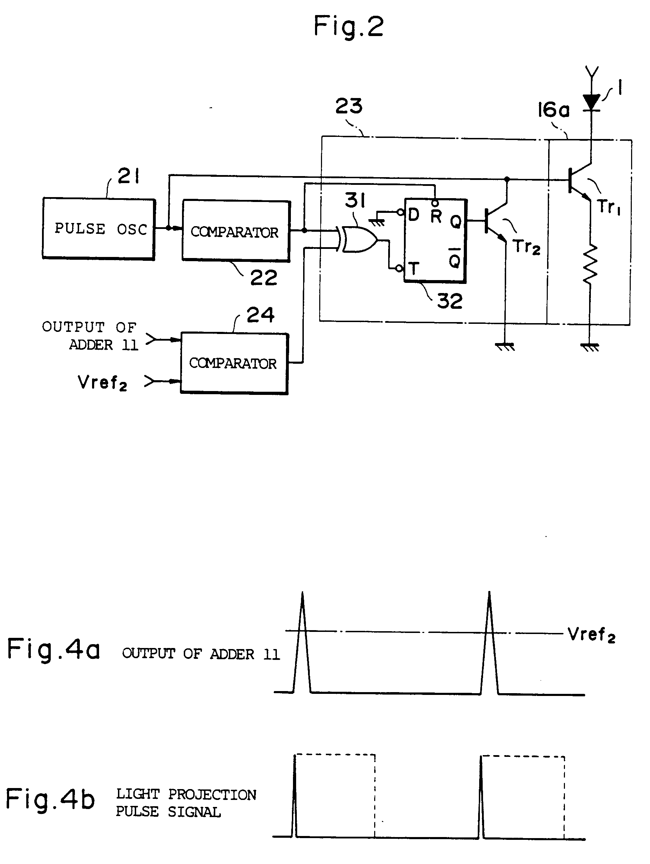

The light projection control circuit 23 will now be further described in detail. Fig. 2 is a circuit diagram showing a detailed construction of the light projection control circuit 23 and its peripheral circuits. In the diagram, the output of the pulse oscillator 21 is input to the comparing circuit 22 and a base of a transistor Tr₁. The comparing circuit 22 converts the trapezoidal signal of the pulse oscillator 21 into the square wave and gives its output to one input terminal of an exclusive OR circuit (hereinafter, referred to as an EOR circuit) 31. An output of the comparing circuit 24 to compare the output of the adding circuit 11 with the predetermined threshold value V_{ref2} is input to the other input terminal of the EOR circuit 31. The EOR circuit 31 gives an exclusive OR signal to a timing input terminal T of a DT flip-flop 32. The inverted signal of the L level, that is, the signal of the H level is given to a data input terminal D of the DT flip-flop 32. On the other hand, the DT flip-flop 32 is forcedly reset by a trailing edge of the output signal of the comparing circuit 22. The DT flip-flop 32 gives its Q output to a base of a transistor Tr₂. The transistor Tr₂ is connected between a base and an emitter of the transistor Tr₁. When the transistor Tr₂ is turned on, the transistor Tr₁ is forcedly turned off. A light source is connected to the collector terminal of the transistor Tr₁ through the light projecting device 1, for instance, a light emitting diode. The transistor Tr₁ operates as the light projecting device drive circuit 16a to intermittently drive the light projecting device 1.

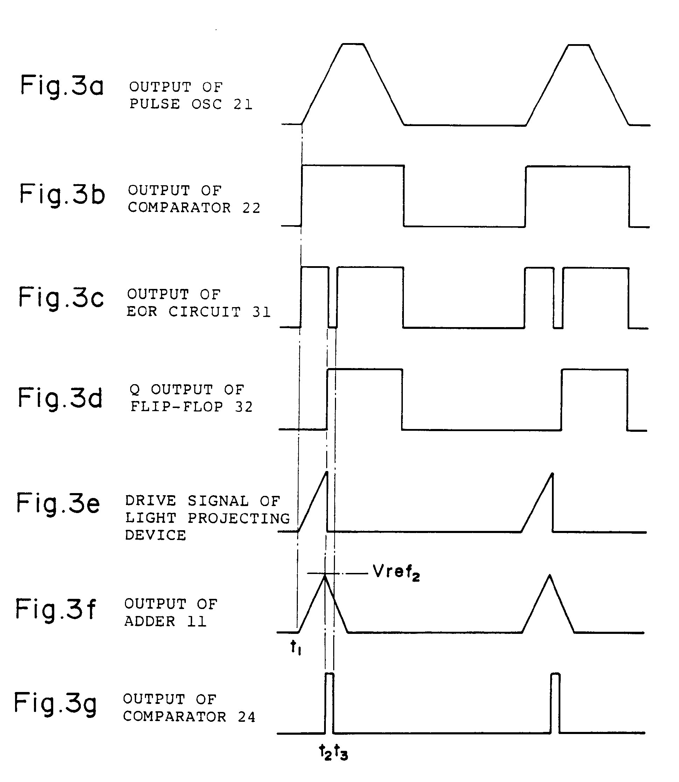

The operation of the embodiment will now be described with reference to time charts of Figs. 3a to 3g. Fig. 3a shows the oscillation signal of the pulse oscillator 21 and the oscillation signal is converted into the square wave signal as shown in Fig. 3b by the comparing circuit 22. The square wave signal is then input as a digital signal to the signal processing circuit 14 and EOR circuit 31. Therefore, as shown in Fig. 3c, the EOR circuit 31 outputs a signal as shown in the diagram from time t₁. At time t₁, the Q output of the DT flip-flop 32 is at the L level as shown in Fig. 3d and the transistor Tr₂ is turned off. Thus, when the output of the pulse oscillator 21 is given to the transistor Tr₁, a drive current flows through the light projecting device 1 as shown in Fig. 3e. When the object 4 exists in a predetermined detecting range on the optical path of the light beam 3, the diffused reflected lights from the object 4 are transmitted through the condenser lens 5 to the PSD 6. The currents obtained at both ends of the PSD 6 are converted into the voltage signals by the I/V converters 8 and 9. The voltage signals are added by the adding circuit 11, so that a signal as shown in Fig. 3f is derived from the adding circuit 11. A gradient of the addition signal differs in accordance with the distance to the object 4 to be detected or its surface state, for instance, color, glossiness, or the like.

At time t₂ when the level of the addition signal exceeds the preset threshold value V_{ref2} in the comparing circuit 24, an output as shown in Fig. 3g is obtained from the comparing circuit 24 and the output of the EOR circuit 31 is inverted. Therefore, as shown in Fig. 3d, since the DT flip-flop 32 is set by a trailing edge of the inverted output, the transistor Tr₂ is turned on, the base current of the transistor Tr₁ is input to the transistor Tr₂ and the driving of the light projecting device 1 is stopped. Therefore, when the output of the adding circuit 11 reaches the predetermined threshold value V_{ref2}, the light projection is stopped.

In the embodiment, since the denominator (the output of the adding circuit 11) as a divisor to divide the output of the subtracting circuit 10 is always set to the predetermined value V_{ref2}, the dividing circuit becomes unnecessary. The output of the subtracting circuit 10 at time t₂ directly indicates the position signal of the object. In other words, the output of the subtracting circuit 10 is given to the S/H circuit 20 and held at time t₂ corresponding to the leading edge of the output of the comparing circuit 24 and given to the comparing circuit 13. When the level of the signal held exceeds the predetermined threshold level V_{ref1} set in the comparing circuit 13, it is possible to discriminate the object is located within a predetermined range. The output of the comparing circuit 13 is given to the signal processing circuit 14 and a check is made to see if the output of the comparing circuit 13 is obtained or not by the gate circuit 14a of the signal processing circuit 14. When the comparison signal is derived, the input signal is given to the integrating circuit 14b and its output level rises. Therefore, only when the output of the comparing circuit 13 is transmitted to the integrating circuit 14b through the gate circuit 14a for a few continuous periods, the output signal level reaches the threshold level V_{ref3} of the comparing circuit 14c, so that the object detection signal can be output.

When the light emission of the light projecting device 1 stops, the output of the adding circuit 11 decreases, so that the output of the comparing circuit 24 is also stopped. In Fig. 3g, the time width between time t₂ and time t₃ is slightly exaggerated to show. After that, the DT flip-flop 32 is reset by the trailing edge of the output of the comparing circuit 22.

When the detection amount of the light reflected from the object 4 is large, the light projection is stopped in a short time after the start of the light projection. When the diffused reflected light amount obtained from the object is small because of a long distance of the object or its surface state, the light projection is stopped in a relatively long time after the start of the light projection. On the other hand, if the light amount is extremely small and the sum of the current outputs which are obtained from both ends of the PSD 6 does not reach the threshold level V_{ref2} of the comparing circuit 24, the light projection is not stopped and no sampled signal is also given, so that the object detection signal is not output.

In the embodiment, the trapezoidal signal is output from the pulse oscillator 21 and the light projecting device is driven until the output from the adding circuit reaches the predetermined threshold level for a period of time until the output signal from the oscillator reaches the peak value. However, a pulse oscillator to generate a triangular wave pulse signal can be also used.

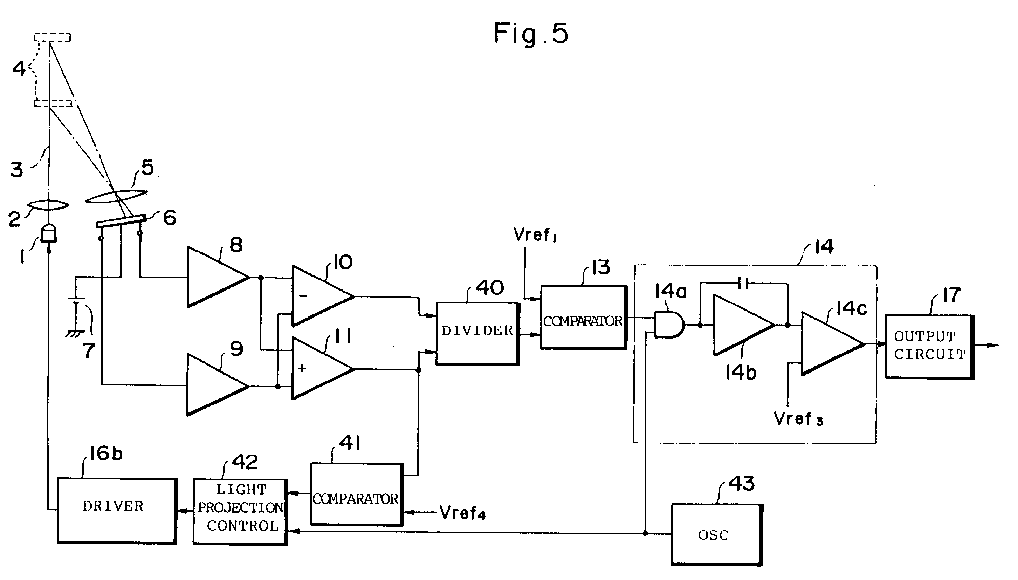

The output of the oscillator can be also set to the square wave output. In such a case, by directly giving the output of the square wave oscillator to the signal processing circuit 14 and EOR circuit 31, the light projection can be stopped when a predetermined light detection level is obtained. In this case, as shown in Figs. 4a and 4b, when the light projection is performed, since the output which is obtained from the adding circuit 11 also rises almost simultaneously with the driving of the light projecting device, the light projection cannot be accurately stopped by the predetermined reflected light level. However, the reflected light amount becomes almost constant and a large change as in the conventional apparatus can be eliminated. Therefore, in this case, in place of the sample and hold circuit, it is necessary to output the position signal indicative of the position of the object by using the dividing circuit to divide the output of the subtracting circuit 10 by the output of the adding circuit 11 in a manner similar to the foregoing conventional apparatus. However, since the reflected light amount level which is used as a denominator of the dividing circuit does not so largely change but becomes almost constant, a variation in detection of the position can be reduced.

### SECOND EMBODIMENT

Fig. 5 is a block diagram showing a construction of a distance measuring apparatus according to the second embodiment of the invention. In the diagram, the same parts and components as those in the foregoing first embodiment are designated by the same reference numerals and their descriptions are omitted. In the embodiment, the outputs of the subtracting circuit 10 and adding circuit 11 are given to a dividing circuit 40 and the subtracted output is divided by the added output. An output of the dividing circuit 40 is given to the comparing circuit 13. The output of the adding circuit 11 is given to a comparing circuit 41 as comparing means. A predetermined threshold value V_{ref4} is set in the comparing circuit 41. When the input signal level exceeds the predetermined threshold value V_{ref4}, the comparing circuit 41 gives a comparison output to a light projection control circuit 42. On the other hand, the distance measuring apparatus in the second embodiment has an oscillator 43 to generate a square wave signal at every predetermined period. The square wave output signal is given to the signal processing circuit 14 and light projection control circuit 42. The light projection control circuit 42 constructs light projection control means for giving a signal whose level gradually increases to a light projecting device drive circuit 16b until the time point when the signal is given from the comparing circuit 41 at every oscillating period of the oscillator 43 and for stopping the generation of such a signal when the comparison output is given. The constructions of the signal processing circuit 14 and output circuit 17 are similar to those in the first embodiment mentioned above. The subtracting circuit 10, adding circuit 11, and dividing circuit 40 construct position signal detecting means for outputting the position signal indicative of the position of an object by an output distribution of the PSD 6.

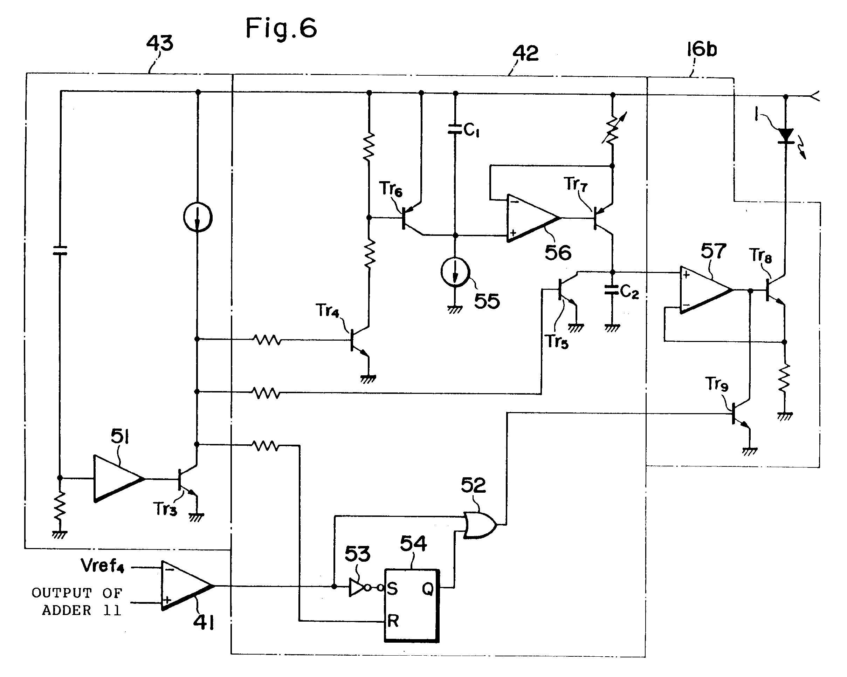

The light projection control circuit 42, oscillator 43, and peripheral circuits thereof will be described further in detail with reference to Fig. 6. In the diagram, the oscillator 43 comprises an operational amplifier 51 and a transistor Tr₃ and is the square wave generator to generate the square wave signal. The output of the oscillator 43 is given to bases of transistors Tr₄ and Tr₅ of the light projection control circuit 42. The comparison output of the comparing circuit 41 is given to an OR circuit 52 and is also given through an inverter 53 to an inverting set input terminal of an RS flip-flop 54, respectively. A Q output of the flip-flop 54 is given to the OR circuit 52. The RS flip-flop 54 is reset by a trailing edge of the square wave signal. The transistor Tr₄ is provided to control a transistor Tr₆ connected to the power source side. The transistor Tr₆ is connected in parallel with a capacitor C₁ and its collector terminal is connected to the ground through a constant current source 55. A terminal voltage of the capacitor C₁ is connected to an input terminal of a voltage follower 56. An output of the voltage follower 56 is connected to a capacitor C₂ through a transistor Tr₇. The voltage follower 56 is provided to obtain a transmission pulse signal of a waveform in which the level increases and a change rate of the level also increases at every oscillating period of the oscillator 43 by gradually charging the capacitor C₂. A terminal output of the capacitor C₂ is given to the drive circuit 16b. The drive circuit 16b has a voltage follower 57 and transistors Tr₈ and Tr₉. The voltage follower 57 drives the light projecting device 1 such as a light emitting diode by the light projection pulse signal through the transistor Tr₈. The transistor Tr₉ is connected between an output terminal of the voltage follower 57 and the ground. An output signal of the OR circuit 52 is given to a base of the transistor Tr₉. The OR circuit 52 stops the light projection pulse when the comparison output is given.

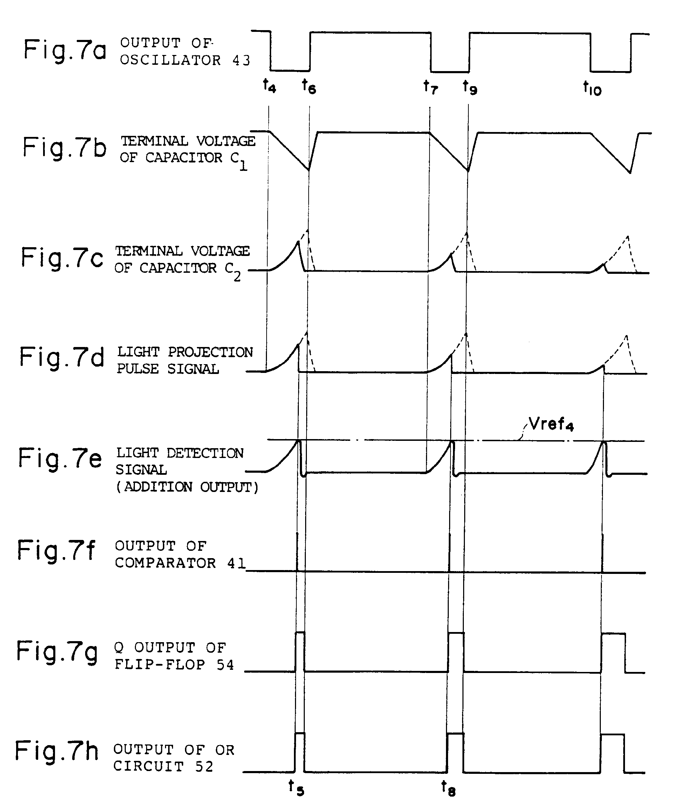

The operation of the embodiment will now be described with reference to waveform diagrams. Fig. 7a shows an oscillation output of the oscillator 43 (collector output of the transistor Tr₃). In response to the oscillation output, for instance, the transistor Tr₄ is turned off at time intervals from time t₄ to time t₆, t₇ to t₉, and the like is turned on at time intervals from time t₆ to time t₇, t₉ to t₁₀, and the like, respectively. When the transistor Tr₄ is turned off, the transistor Tr₆ is also turned off, so that the capacitor C₁ is charged by the constant current source 55. Therefore, the terminal voltage of the capacitor C₁ (terminal voltage on the side of the current source 55) decreases after times t₄, t₇, and T₁₀ as shown in Fig. 7b, respectively. For a period of time when the transistor Tr₄ is in the OFF state, that is, for the time intervals from time t₄ to time t₆, t₇ to t₉, and the like, the terminal voltage of the capacitor C₁ decreases. If the charging time constant of the capacitor C₁ is set to an enough large value, the triangular wave signal having an almost linear shape can be obtained as shown in the diagram. The triangular wave signal is given to the capacitor C₂ through the voltage follower 56 and transistor Tr₇, so that the capacitor C₂ is charged. Therefore, the terminal voltage of the capacitor C₂ results in a signal whose rising rate gradually increases from times t₄, t₇, t₁₀, and the like as shown in Fig. 7c. Therefore, a light projection pulse signal as shown in Fig. 7d is obtained from the light projecting device drive circuit 16b and the light projecting device 1 is driven.

When the object 4 exists in the detecting region on the optical path of the light beam 3, the diffused reflected lights are obtained from the object 4. The current signals which are output from the position sensitive device 6 are converted into the voltage signals by the I/V converters 8 and 9 and they are given to the adding circuit 11. A light detection signal as shown in Fig. 7e is derived from the adding circuit 11. The light detection signal is compared with a predetermined threshold value V_{ref4} which has been set in the comparing circuit 41. When the signal level exceeds the threshold level V_{ref4}, the transistor Tr₉ is turned on through the OR circuit 52 and the light projection pulse signal level is set to zero at times t₅ and t₈ as shown in Fig. 7d. At the same time, the RS flip-flop 54 of the light projection control circuit 42 is inverted and a Q output is derived. Since the RS flip-flop 54 is reset at times t₆, t₉, and the like corresponding to the leading edge of the output of the oscillator 43, the Q output of the RS flip-flop 54 is held at the H level for the time intervals from t₅ to t₆ and from t₈ to t₉. Therefore, since the addition output is stopped at an almost constant value, the position signal indicative of the position of an object can be obtained by dividing the output of the subtracting circuit 10 at that time by the output of the adding circuit 11 by the dividing circuit 40, that is, on the basis of the output distribution of the PSD 6.

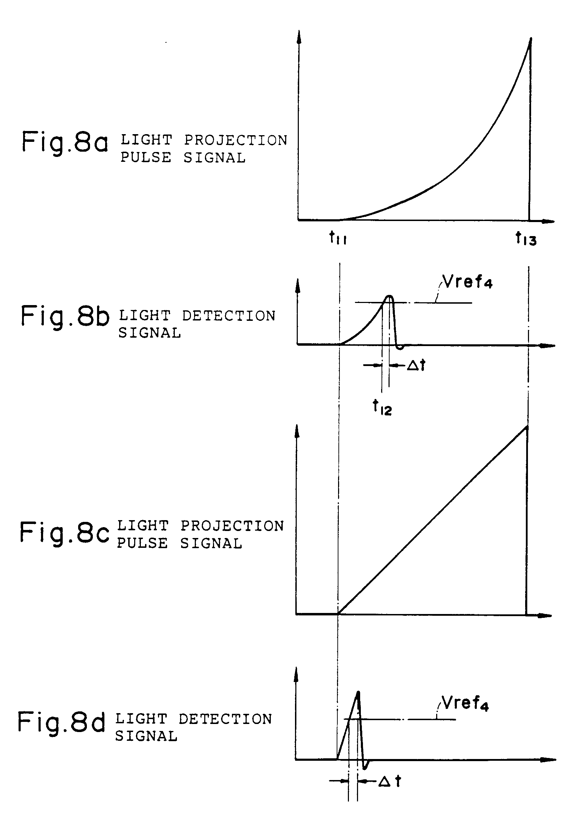

In the embodiment, the light projection pulse signal whose level increases and whose increasing rate gradually increases from the start point of the light projection is used. Thus, in enlarged diagrams of the light projection pulse and its light detection signal shown in Figs. 8a and 8b, when it is assumed that the light projection pulses are generated for the time interval from t₁₁ to t₁₃, in the case where an object having an extremely high reflectivity is located near the distance measuring apparatus, the output level of the adding circuit 11 reaches the threshold value V_{ref4} in a short time from the start point of the light projection and the light projection. is stopped. In general, a certain time delay is certainly caused in the circuit for the time interval after the output level of the adding circuit 11 reached the threshold value V_{ref4} until the light projection is actually stopped. However, if the reflected light amount is remarkably large and the signal level reaches the threshold value V_{ref4} for the time interval from t₁₁ to t₁₂ corresponding to the former half of the light projection pulse, the change rate of the level is not so large. Therefore, the error amount due to a delay time Δₜ of the stop of the light projection pulse is small. However, in the case of using a triangular wave light projection pulse as shown in Fig. 8c, even if the light projection pulse is stopped with the same delay time Δₜ after the light detection signal level reached the threshold value V_{ref4}, since the change rate of the level is large, the light detection signal level fairly exceeds the threshold value V_{ref4} for the period of time until the light projection is actually stopped as shown in Fig. 8d and one of the two input signals of the dividing circuit increases.

Returning to Figs. 5 to 7h, the output of the dividing circuit 40 is given to the comparing circuit 13. When the output signal level exceeds the threshold value V_{ref1} of the comparing circuit 13, it is possible to discriminate an object is located within a predetermined range. The output of the comparing circuit 13 is given to the signal processing circuit 14. The operations of the signal processing circuit 14 and output circuit 17 are similar to those described in the first embodiment.

The transistors Tr₄ and Tr₅ are turned on at times t₆ and t₉ when each of the transmitting periods ends. The capacitor C₁ can be discharged.

In the embodiment, the parabolic transmission pulse signal is obtained by charging the capacitor C₂ by the triangular wave signal. However, the similar effect can be also obtained by using various kinds of light projection pulse signals in each of which the increasing rate gradually rises.

### THIRD EMBODIMENT

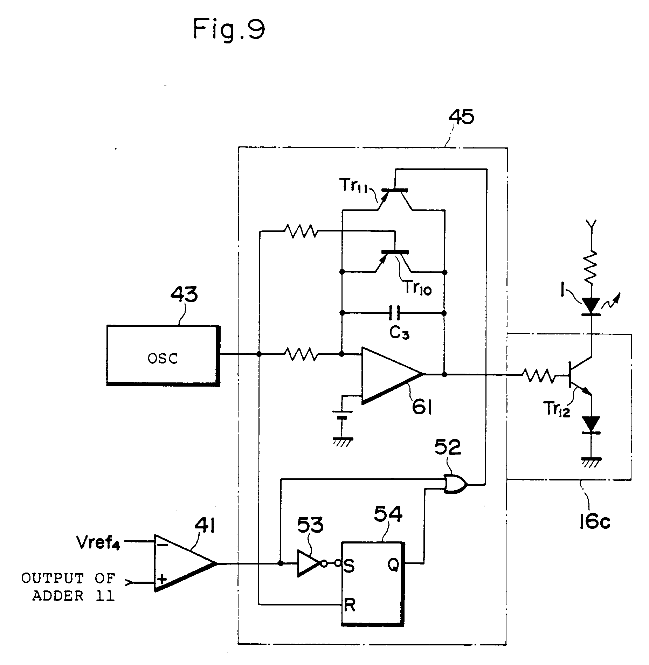

Fig. 9 is a circuit diagram showing the third embodiment of a light projection control circuit and a light projecting device drive circuit. In the diagram, the same parts and components as those shown in the first and second embodiments are designated by the same reference numerals. In the third embodiment, similarly to the second embodiment, the output of the adding circuit 11 is given to a light projection control circuit 45 through the comparing circuit 41. The light projection control circuit 45 has an operational amplifier 61 to integrate a terminal voltage across a capacitor C₃. The output of the oscillator 43 is given to an input terminal of the operational amplifier 61. The capacitor C₃ and PNP type transistors Tr₁₀ and Tr₁₁ are connected between input and output terminals of the operational amplifier 61. The output of the oscillator 43 is connected to a base of the transistor Tr₁₀. The integrating operation is started or stopped by the oscillation output. In a manner similar to the foregoing embodiment, the output of the comparing circuit 41 is given to the OR circuit 52 and to the RS flip-flop 54 through inverter 53. The Q output of the flip-flop 54 is connected to a base of a transistor Tr₁₁ through the OR circuit 52. The output of the light projection control circuit 45 is given to a base of a transistor Tr₁₂ of the light projecting device drive circuit 16c. Since the base-emitter characteristic of the transistor Tr₁₂ is exponential as shown by the diode characteristic, by changing the voltage between the base and emitter like a triangular wave, an exponential light projection pulse current signal is obtained from the transistor Tr₁₂. The light emitting diode 1 as the light projecting device is driven by the exponential light projection pulse signal. In the embodiment, the light projection control circuit 45 and light projecting device drive circuit 16c construct the light projection control means for generating a light projection pulse in which an increasing rate of the level gradually increases from the start point of the light projection at every predetermined period.

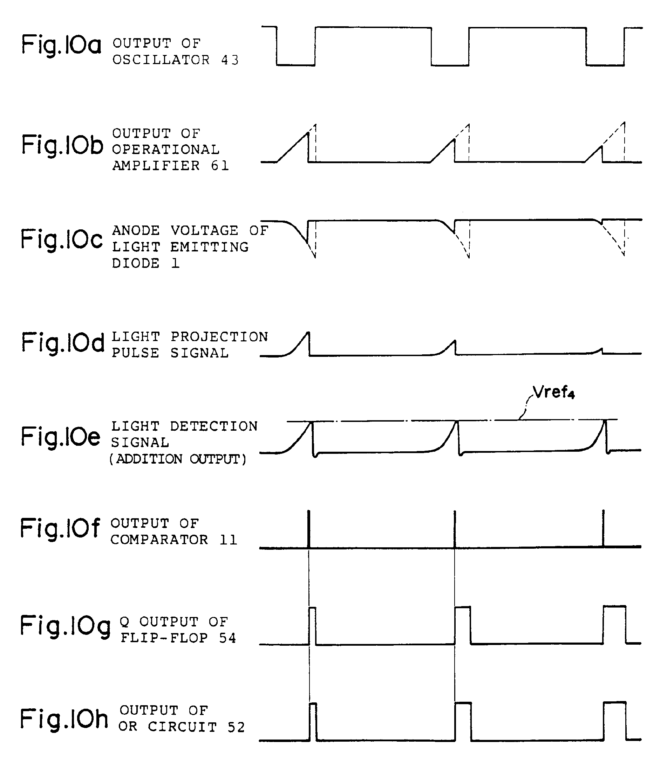

Figs. 10a to 10h are waveform diagrams showing the operation of the embodiment. In the diagrams, the output of the oscillator 43 is given to the operational amplifier 61 of the light projection control circuit 45. A triangular wave signal as shown in Fig. 10b is output from the amplifier 61. Since the triangular wave signal is input to the transistor Tr₁₂ of the drive circuit 16c, exponential light projection pulse signals as shown in Figs. 10c and 10d can be obtained. When an object exists near the distance measuring apparatus and the reflected light amount from the object is large and the addition output signal level reaches the threshold value V_{ref4}, the transistor Tr₁₁ is turned on through the OR circuit 52 and the charging of the capacitor C₃ is stopped, so that the transmission pulse can be soon stopped.

In the embodiment, the exponential signal is used as the light projection pulse signal. However, various kinds of light projection control signals in each of which the increasing rate of the level gradually increases can be also obviously used.

### FOURTH EMBODIMENT

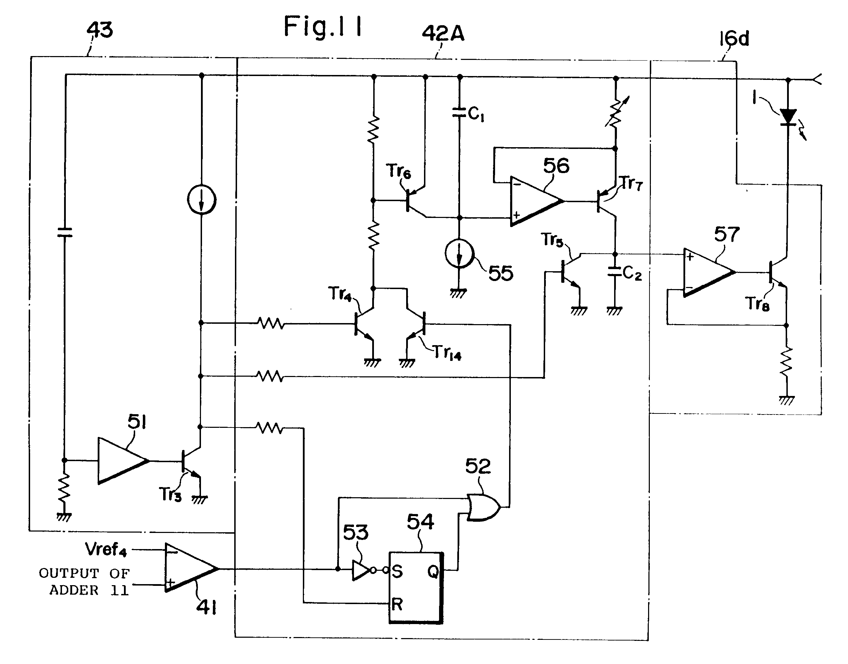

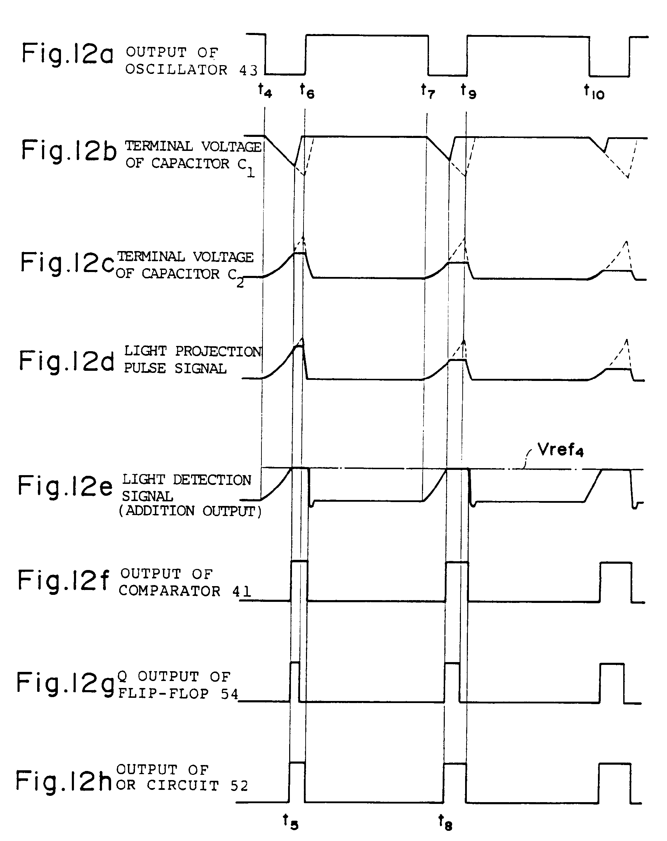

Figs. 11 and 12a to 12h show the fourth embodiment of the invention. Although the whole circuit construction of a distance measuring apparatus of the fourth embodiment is fundamentally the same as that shown in Fig. 5, it differs with respect to the following points. That is, in place of the light projection control circuit 42 and light projecting device drive circuit 16b shown in Fig. 5, a light projection control circuit 42A and a light projecting device drive circuit 16d are provided in the fourth embodiment and a practical example of the circuits 42A and 16d is shown in Fig. 11. In Fig. 11, the same parts and components as those described above are designated by the same reference numerals and their descriptions are omitted here. Since Figs. 12a to 12h correspond to Figs. 7a to 7h, the same reference numerals are used in these diagrams as possible.

The light projection control circuit 42A constructs the light projection control means for outputting a signal whose level gradually increases until the signal is given from the comparing circuit 41 at every oscillating period of the oscillator 43 and for giving the signal to the drive circuit 16d and for maintaining the output level until a predetermined time (until the end of the oscillating period) when the comparison output is given. The drive circuit 16d intermittently drives the light projecting device 1.

When comparing Figs. 6 and 11, the transistor Tr₉ which is controlled by the OR circuit 52 is eliminated from the drive circuit 16b. In place of the Tr₉, a transistor Tr₁₄ is provided in the control circuit 42A. The transistor Tr₁₄ is connected in parallel with the transistor Tr₄ and controlled by the output of the OR circuit 52. The transistor Tr₆ is controlled by the transistors Tr₄ and Tr₁₄.

The operation of the embodiment will now be described. For instance, by the oscillation output of the oscillator 43, the transistor Tr₄ is turned off for the time intervals from t₄ to t₆, from t₇ to t₉, and the like and is turned on for the time intervals from t₆ to t₇, from t₉ to t₁₀, and the like, respectively. When the transistor Tr₄ is turned off, the transistor Tr₆ is also turned off, so that the capacitor C₁ is charged by the constant current source 55. Therefore, the terminal voltage across the capacitor C₁ decreases after times t₄, t₇, and t₁₀ as shown in Fig. 12b. The terminal voltage is given to the capacitor C₂ through the voltage follower 56 and transistor Tr₇ and the capacitor C₂ is charged. As shown by broken lines in Fig. 12c, the terminal voltage of the capacitor C₂ results in a signal whose increasing rate gradually increases from times t₄, t₇, and t₁₀, respectively. Thus, a light projection pulse signal as shown by broken lines in Fig. 12d is obtained from the drive circuit 16d and the light projecting device 1 is driven. When the object 4 exists in the detecting region, the diffused reflected lights are obtained from the object 4. Due to this, the output currents obtained at both ends of the PSD 6 are converted into the voltage signals by the I/V converters 8 and 9. The voltage signals are added by the adding circuit 11, so that a light detection signal as shown in Fig. 12e is obtained from the adding circuit 11. The light detection signal is compared with the threshold value V_{ref4} set in the comparing circuit 41. When the signal level exceeds the threshold value V_{ref4}, the RS flip-flop 54 of the light projection control circuit 42A is inverted. Thus, the Q output is obtained from the flip-flop 54 at the time point when the added light detection signal exceeds the threshold level V_{ref4} as shown in Figs. 12f and 12g. Since the RS flip-flop 54 is reset at times t₆, t₉, and the like corresponding to the leading edge of the output of the oscillator 43, the Q output is held at the H level for the time intervals from t₅ to t₆, from t₈ to t₉, and the like. Since the transistor Tr₁₄ is turned on through the OR circuit 52 at times t₅ and t₈ when the flip-flop 54 is set and the transistor Tr₆ is turned on, the charging of the capacitor C₁ is stopped. Thus, the terminal voltage of the capacitor C₁ is set to a waveform as shown by solid lines in Fig. 12b. In correspondence to this, the terminal voltage of the capacitor C₂ is also set to a waveform as shown by solid lines in Fig. 12c. Consequently, as shown by solid lines in Fig. 12d, the actual light projection pulse signal is held at a constant level for the period of time after the comparing circuit 41 generated the output until its transmitting period ends (until the output of the oscillator 43 rises), that is, for the time intervals from t₅ to t₆, from t₈ to t₉ and the like. Therefore, since the input level of the PSD 6 is also held constant in the embodiment, the addition output and subtraction output which do not change for the time intervals from t₅ to t₆, from t₈ to t₉, and the like are given to the dividing circuit 40, respectively. Since the input signals of the dividing circuit 40 do not fluctuate, there is no need to use a dividing circuit having a high response speed. Since the addition output is almost constant, the position signal indicative of the position of an object can be accurately obtained from the dividing circuit 40 by using an ordinary dividing circuit without requiring a wide dynamic range. Since the transistor Tr₅ is turned on at times t₆, t₉, and the like when each period is finished, the capacitor C₂ can be discharged.

In the embodiment, the RS flip-flop 54 is set by the output of the comparing circuit 41 and the charging of the capacitor C₁ is stopped and the level of the light projection pulse is held. If the transistor Tr₁₄ was directly controlled by the output of the comparing circuit 41, there occurs an inconvenience such that the light sensitive level is soon reduced to V_{ref4} or lower after the stop of the charging operation, the comparison output trails, and the light projection is restarted. However, according to the construction of the embodiment, such an inconvenience is solved.

In the embodiment, a triangular wave is formed by charging the first capacitor at every light projecting period and the second capacitor is charged on the basis of the triangular wave, thereby obtaining a parabolic light projection pulse whose voltage level increases in proportion to the square of the time. However, the triangular wave can be also directly used or the exponential waveform can be also used as the light projection pulse signal.

Further in the embodiment, the ratio of the addition output and subtraction output is calculated by the dividing circuit 40 and used as a position signal. However, it is also possible to directly give the two I/V conversion outputs which are obtained from both ends of the PSD 6 to the dividing circuit 40 and to obtain the position signal by the ratio of those output signals. On the other hand, by performing the division between the output of the additing circuit and the output of either one of the I/V converters 8 and 9, for instance, the output of the I/V converter 9, the position signal can be also obtained.

### FIFTH EMBODIMENT

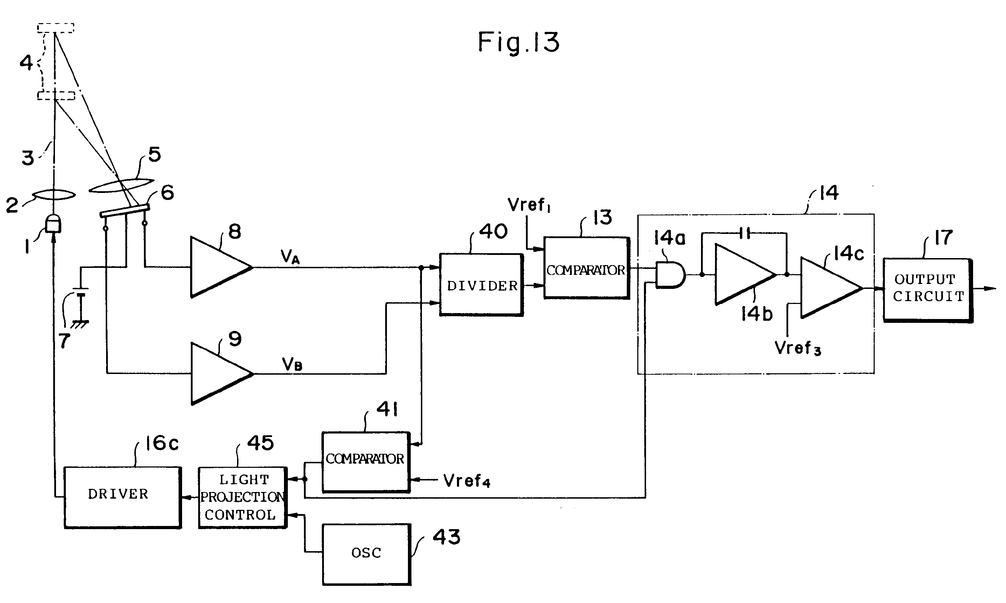

Fig. 13 shows the fifth embodiment. In the diagram, the same parts and components as those shown in Fig. 5 are designated by the same reference numerals and their descriptions are omitted. When comparing the embodiment shown in Fig. 13 with the circuit of Fig. 5, the subtracting circuit 10 and adding circuit 11 are not provided. The gate circuit 14a of the signal processing circuit 14 is controlled by the output signal of the comparing circuit 41. The current outputs of the PSD 6 are given to the I/V converters 8 and 9. The I/V converters 8 and 9 convert the current outputs obtained from both ends of the PSD 6 into the voltage signals V_{A} and V_{B}. The output voltage signals V_{A} and VB are given to the dividing circuit 40. The dividing circuit 40 divides the output signals V_{B} by V_{A} to calculate, for instance, the ratio V_{B}/V_{A}, thereby obtaining a distance signal corresponding to the distance to an object. An output of the dividing circuit 40 is given to the comparing circuit 13.

The distance measuring apparatus of the embodiment has the oscillator 43 to intermittently generate a square wave signal. An output of the oscillator 43 is given to the light projection control circuit 45. The output of either one of the I/V converters, preferably, the output V_{A} of the I/V converter 8 arranged at a position which is away from the light projecting device 1 is given to the comparing circuit 41. The predetermined threshold level V_{ref4} is set in the comparing circuit 41. When the output signal level of the I/V converter 8 is the threshold level V_{ref4} or lower, the comparing circuit 41 gives a control signal to the light projection control circuit 45.

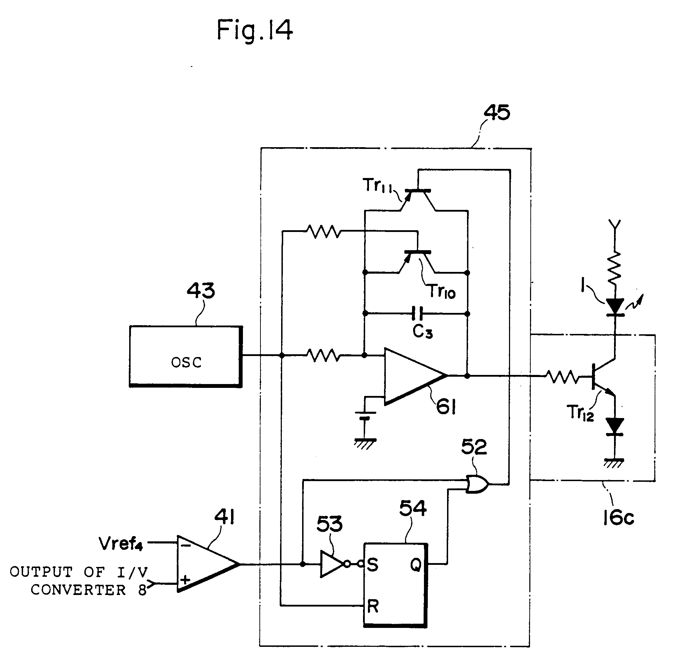

A construction of the light projection control circuit 45 is shown in Fig. 14. The control circuit 45 is constructed substantially in the same manner as the circuit shown in Fig. 9 except a different point that the threshold level V_{ref4} and the output of the I/V converter 8 are input to the comparing circuit 41 to control the flip-flop 54 and OR circuit 52.

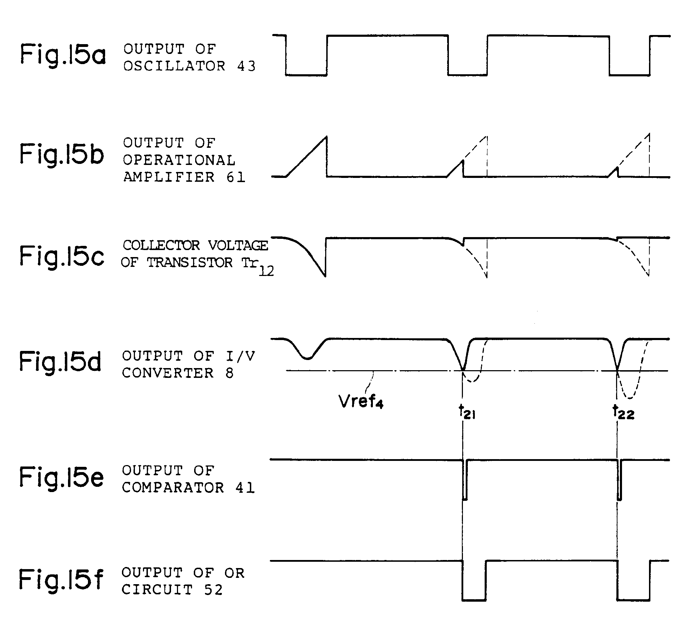

The operation of the embodiment will now be described with reference to time charts. Fig. 15a shows an oscillation signal of the oscillator 43. The oscillation signal is given to the operational amplifier 61 of the light projection control circuit 45 and a triangular wave signal as shown in Fig. 15b is output. Since the triangular wave signal is given to the transistor Tr₁₂ of the light projecting device drive circuit 16c, an exponential light projection pulse signal can be intermittently obtained as shown in Fig. 15c, which illustrates a collector voltage of the transistor Tr₁₂. When the reflected light amount from the object is large, at times t₂₁ and t₂₂ when the output of the I/V converter 8 reaches the threshold level V_{ref4} (the inverted output is shown in Fig. 15d), the transistor Tr₁₁ is turned on through the OR circuit 52, thereby stopping the charging of the capacitor C₁. Therefore, the light projection pulse can be soon stopped. Thus, the output of the operational amplifier 61 and the collector voltage of the transistor Tr₁₂ change as shown by solid lines in Figs. 15b and 15c. When the light projection is stopped at a predetermined level, since the level of one of the two input signals of the dividing circuit 40 becomes almost constant, the distance to the object can be detected on the basis of the ratio of the outputs of the I/V converters 8 and 9 at that time. The output of the dividing circuit 40 is given to the comparing circuit 13 and is checked to see if it exceeds the threshold value V_{ref1} or not. The output of the comparing circuit 13 is input to the signal processing circuit 14 and the foregoing process is executed.

In the embodiment, the light projection is stopped when the output of the I/V converter 8 as the light current output on the side remote from the light projecting device 1 reaches the predetermined level. This is because when the object 4 exists at a further close position, its reflected light amount level is large, but it is effective to prevent the saturation of the dividing circuit 40 by stopping the light projection on the basis of the output V_{A} of the I/V converter 8 whose output level increases at that time. However, the light projection can be also stopped on the basis of the output of the I/V converter 9. The dividing circuit 40 can obviously output a position signal on the basis of not only the ratio V_{B}/V_{A} but also the ratio V_{A}/V_{B}.

### SIXTH EMBODIMENT

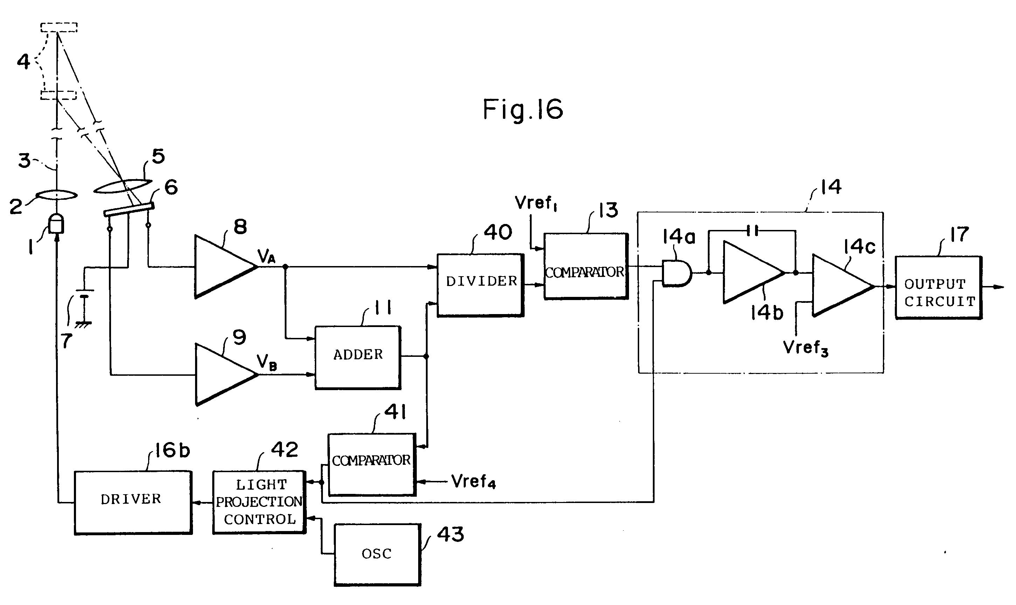

Fig. 16 is a block diagram showing a construction of a distance measuring apparatus according to the sixth embodiment. In Fig. 16, the same parts and components as those shown in the fifth embodiment are designated by the same reference numerals and their descriptions are omitted. In the sixth embodiment, the outputs of the I/V converters 8 and 9 are given to the adding circuit 11. The adding circuit 11 adds the outputs V_{A} and V_{B} of the I/V converters 8 and 9 and gives its addition output to the dividing circuit 40. The output of the I/V converter 8 is given to the dividing circuit 40. Similarly to the fifth embodiment, a predetermined threshold value V_{ref4} is set in the comparing circuit 41. When the input signal level is the threshold level V_{ref4} or lower, the comparing circuit 41 gives a comparison output to the light projection control circuit 42. The distance measuring apparatus in the embodiment has the oscillator 43 to generate a square wave signal at a predetermined period. An output of the oscillator 43 is given to the light projection control circuit 42. The light projection control circuit 42 constructs the light projection control means for outputting a pulse signal. whose level gradually increases until the signal is given from the comparing circuit 41 at every oscillating period of the oscillator 43 and for giving the pulse signal to the light projecting device drive circuit 16b and for stopping the generation of the pulse signal when the comparison output is given.

Constructions of the oscillator 43, light projection control circuit 42, and drive circuit 16b are the same as those shown in Fig. 6. The operation of the distance measuring apparatus in the sixth embodiment is the same as that shown in Figs. 7a to 7h. When the comparison output is obtained from the comparing circuit 41, the result of the division, i.e., V_{A}/(V_{A}+V_{B}), between the addition output (V_{A}+ V_{B}) of the adding circuit 11 and the output V_{A} of the I/V converter 8 is given to the comparing circuit 13. The result of the comparison is input to the signal processing circuit 14 through the gate circuit 14a.

Although the division of the addition output of the I/V converters 8 and 9 and the output V_{A} of the I/V converter 8 is executed by the dividing circuit 41 in the embodiment, the output V_{B} of the other I/V converter 9 can be also divided by the addition output.

## Claims

1. A distance measuring apparatus including light projecting means (1, 2) which has a light projecting device (1) and projects a parallel light beam toward a detecting region and light detecting means (5, 6) having a position sensitive device (6) which has anoptical axis arranged so as to cross an optical axis of said light projecting means at a predetermined angle and receives diffused reflected light from an object (4) and outputs at least two currents corresponding to light detecting positions, in which a distance to the object is detected on the basis of the light detecting positions of said position sensitive device, characterized by
light projection signal generating means (21, 42, 42A, 43, 45) for generating, at a predetermined period, a light projection signal in which a level of the signal increases with the lapse of time from the start point of the light projection signal generation;
comparing means (24, 41) for comparing the level of the output currents from the position sensitive device with a predetermined threshold value each time when the projection signal is generated at the predetermined period and for generating a comparison output when the level of the output current from the position sensitive device reaches the predetermined threshold value; and
position signal detecting means (13, 14, 20,40) for outputting a signal relating to a position of the object on the basis of a predetermined relationship between the output currents from the position sensitive device which are obtained at a time when the level of the output current from the position sensitive device reaches the predetermined threshold value.

2. A distance measuring apparatus according to claim 1 characterized in that said apparatus further comprises light projection control means (23, 42, 45) for stopping the light projection by the light projection means when the comparison output is generated from the comparing means.

3. A distance measuring apparatus according to claim 1 characterized in that said apparatus further comprises light projection control means (42A) for holding the light projection signal at its level at a time when the comparison output is generated from the comparing means.

4. A distance measuring apparatus according to claim 1 characterized by
adding means (11) for adding the current outputs obtained from the position sensitive device; and
said comparing means (24, 41) comparing an addition output of the adding means with the predetermined threshold value and generating the comparison output when the level of the addition output exceeds the predetermined threshold value.

5. A distance measuring apparatus according to claim 1 characterized in that said light projection signal generating means generates the light projection signal in which an increasing rate of the level gradually increases from the start point of the light projection signal generation.

6. A distance measuring apparatus according to claim 3 characterized by
adding means (11) for adding the current outputs obtained from the position sensitive device;
said comparing means (41) comparing an addition output of the adding means with the predetermined threshold value and for generating the comparison output when the level of the addition output exceeds said predetermined threshold value; and
said position signal detecting means (13, 14, 40) outputting the signal relating to the position of the object on the basis of a distribution of the current outputs which are obtained from the position sensitive device by giving said current outputs to a dividing circuit (40).

7. A distance measuring apparatus according to claim 2 characterized by
said comparing means (41) comparing either one of the current outputs obtained from the position sensitive device with the predetermined threshold value and for generating the comparison output when the current output exceeds the predetermined threshold value;
said light projection signal generating means generating a light projection signal in which an increasing rate of the level gradually increases from the start point of the light projection signal generation; and
a dividing circuit (40) for calculating a ratio of the output currents of the position sensitive device which are obtained at a time when the light projection is stopped.

8. A distance measuring apparatus according to claim 4 characterized by
said light projection signal generating means generating a light projection signal in which a level increasing rate of the level gradually increases from the start point of the light projection signal generation;
light projection control means (42) for stopping the light projection by the light projection means when the comparison output is generated from the comparing means; and
a dividing circuit (40) for outputting a signal relating to a position of the object on the basis of a ratio of the addition output of the adding means and either one of the current outputs of the position sensitive device.

## Patentansprüche

1. Abstandsmeßgerät mit Lichteinstrahlmitteln (1, 2), welche eine Lichteinstrahlvorrichtung (1) aufweisen und ein Parallellichtbündel in einen Nachweisbereich einstrahlen, und Lichtnachweismitteln (5, 6) mit einer positionsempfindlichen Vorrichtung (6), welche eine optische Achse so angeordnet aufweist, daß sie eine optische Achse der Lichteinstrahlmittel unter einem bestimmten Winkel kreuzt, und welche von einem Gegenstand (4) diffus reflektiertes Licht empfängt und wenigstens zwei Ströme ausgibt, die Lichtnachweispositionen entsprechen, wobei ein Abstand zum Gegenstand auf der Grundlage der Lichtnachweispositionen der positionsempfindlichen Vorrichtung nachgewiesen wird, gekennzeichnet durch
Lichteinstrahlungssignalerzeugungsmittel (21, 42, 42A, 43, 45) zum Erzeugen, an einer bestimmten Zeitdauer, eines Lichteinstrahlsignals, bei welchem der Signalwert mit dem Verlauf der Zeit vom Anfangspunkt der Lichteinstrahlungssignalerzeugung zunimmt,
Vergleichsmittel (24, 41) zum Vergleichen des Werts der Ausgangsströme der positionsempfindlichen Vorrichtung mit einem bestimmten Schwellenwert jedesmal, wenn das Einstrahlungssignal an der bestimmten Zeitdauer erzeugt wird, und Erzeugen eines Vergleichsausgangssignals, wenn der Wert des Ausgangsstromes der positionsempfindlichen Vorrichtung den bestimmten Schwellenwert erreicht, und
Positionssignalnachweismittel (13, 14, 20, 40) zum Ausgeben eines auf eine Position des Gegenstands bezüglichen Signals auf der Grundlage einer bestimmten Beziehung zwischen den Ausgangsströmen der positionsempfindlichen Vorrichtung, welche zu einer Zeit erhalten werden, zu der der Wert des Ausgangsstromes der positionsempfindlichen Vorrichtung den bestimmten Schwellenwert erreicht.

2. Abstandsmeßgerät nach Anspruch 1, dadurch gekennzeichnet, daß das Gerät ferner Lichteinstrahlungssteuermittel (23, 42, 45) zum Beenden der Lichteinstrahlung durch die Lichteinstrahlungsmittel, wenn das Vergleichsausgangssignal von den Vergleichsmitteln erzeugt wird, aufweist.

3. Abstandsmeßgerät nach Anspruch 1, dadurch gekennzeichnet, daß das Gerät ferner Lichteinstrahlungssteuermittel (42A) zum Halten des Lichteinstrahlungssignals auf seinem Wert zu einer Zeit, wenn das Vergleichsausgangssignal von den Vergleichsmitteln erzeugt wird, aufweist.

4. Abstandsmeßgerät nach Anspruch 1, gekennzeichnet durch
Addiermittel (11) zum Addieren der von der positionsempfindlichen Vorrichtung erhaltenen Stromausgangssignale, und dadurch, daß
die Vergleichsmittel (24, 41) ein Additionsausgangssignal der Addiermittel mit dem bestimmten Schwellenwert vergleichen und das Vergleichsausgangssignal erzeugen, wenn der Wert des Additionsausgangssignals den bestimmten Schwellenwert überschreitet.

5. Abstandsmeßgerät nach Anspruch 1, dadurch gekennzeichnet, daß die Lichteinstrahlungssignalerzeugungsmittel ein Lichteinstrahlungssignal erzeugen, bei welchem eine Zunahmegeschwindigkeit des Werts vom Anfangspunkt der Lichteinstrahlungssignalerzeugung allmählich zunimmt.

6. Abstandsmeßgerät nach Anspruch 3, gekennzeichnet durch
Addiermittel (11) zum Addieren der von der positionsempfindlichen Vorrichtung gewonnenen Stromausgangssignale, dadurch, daß
die Vergleichsmittel (41) ein Additionsausgangssignal der Addiermittel mit dem bestimmten Schwellenwert vergleichen und das Vergleichsausgangssignal erzeugen, wenn der Wert des Additionsausgangssignals den bestimmten Schwellenwert überschreitet, und
die Positionssignalnachweismittel (13, 14, 40) das auf die Position des Gegenstands bezügliche Signal auf der Grundlage eine Verteilung der Stromausgangssignale, die von der positionsempfindlichen Vorrichtung durch Aufgeben der Stromausgangssignale auf eine Dividierschaltung (40) gewonnen werden, ausgeben.

7. Abstandsmeßgerät nach Anspruch 2, gekennzeichnet dadurch, daß
die Vergleichsmittel (41) irgendeines der von der positionsempfindlichen Vorrichtung gewonnenen Stromausgangssignale mit dem bestimmten Schwellenwert vergleichen und das Vergleichsausgangssignal erzeugen, wenn das Stromausgangssignal den bestimmten Schwellenwert überschreitet,
die Lichteinstrahlungssignalerzeugungsmittel ein Lichteinstrahlungssignal erzeugen, bei welchem die Zunahmegeschwindigkeit des Werts vom Anfangspunkt der Lichteinstrahlsignalerzeugung an allmählich zunimmt, und durch
eine Dividierschaltung (40) zum Berechnen eines Verhältnisses der Ausgangsströme der positionsempfindlichen Vorrichtung, die zu einer Zeit erhalten werden, wenn die Lichteinstrahlung beendet wird.

8. Abstandsmeßgerät nach Anspruch 4, gekennzeichnet dadurch, daß
die Lichteinstrahlungssignalerzeugungsmittel ein Lichteinstrahlungssignal erzeugen, bei welchem eine Wertzunahmegeschwindigkeit des Werts vom Anfangspunkt der Lichteinstrahlungserzeugung allmählich zunimmt, durch
Lichteinstrahlungssteuermittel (42) zum Beenden der Lichteinstrahlung durch die Lichteinstrahlungsmittel, wenn das Vergleichsausgangssignal von den Vergleichsmitteln erzeugt wird, und durch
eine Dividierschaltung (40) zum Ausgeben eines auf eine Position des Gegenstands bezüglichen Signals auf der Grundlage eines Verhältnisses des Additionsausgangssignals der Addiermittel und irgendeines der Stromausgangssignale der positionsempfindlichen Vorrichtung.

## Revendications

1. Un appareil de mesure de distance qui inclut un moyen projecteur (1, 2) de lumière, qui comprend un dispositif projecteur (1) de lumière et projette un faisceau de lumière parallèle vers une région de détection, et un moyen détecteur (5, 6) de lumière, qui comprend un dispositif (6) sensible à la position qui présente un axe optique agencé de façon à croiser selon un angle prédéterminé un axe optique dudit moyen projecteur de lumière et qui reçoit d'un objet (4) une lumière réfléchie diffusée et produit au moins deux courants qui correspondent à des positions de détection de lumière, dans lequel une distance à l'objet est détectée sur la base des positions de détection de lumière dudit dispositif sensible à la position, caractérisé par
un moyen générateur (21, 42, 42A, 43, 45) de signaux de projection de lumière pour engendrer, à une période prédéterminée, un signal de projection de lumière dans lequel un niveau du signal croît lorsque le temps s'écoule depuis l'instant d'origine de la génération de signal de projection de lumière;
un moyen comparateur (24, 41) pour comparer à une valeur de seuil prédéterminée le niveau des courants produits par le dispositif sensible à la position chaque fois que le signal de projection est engendré à la période prédéterminée et pour engendrer une sortie de comparaison lorsque le niveau du courant de sortie venant du dispositif sensible à la position atteint la valeur de seuil prédéterminée; et
un moyen détecteur (13, 14, 20, 40) de signal de position pour produire un signal lié à une position de l'objet sur la base d'une relation prédéterminée entre les courants de sortie du dispositif sensible à la position qui sont obtenus à un instant où le niveau du courant de sortie du dispositif sensible à la position atteint la valeur de seuil prédéterminée.

2. Un appareil de mesure de distance selon la revendication 1, caractérisé en ce que ledit appareil comprend en outre un moyen de commande (23, 42, 45) de projection de lumière pour arrêter la projection de lumière par le moyen projecteur de lumière lorsque la sortie de comparaison est engendrée par le moyen comparateur.

3. Un appareil de mesure de distance selon la revendication 1, caractérisé en ce que ledit appareil comprend en outre un moyen de commande (42A) de projection de lumière pour maintenir à son niveau le signal de projection de lumière à un instant où la sortie de comparaison est engendrée par le moyen comparateur.

4. Un appareil de mesure de distance selon la revendication 1, caractérisé par
un moyen additionneur (11) pour additionner les sorties de courants obtenues du dispositif sensible à la position; et en ce que
ledit moyen comparateur (24, 41) compare a la valeur de seuil prédéterminée une sortie d'addition du moyen additionneur et engendre la sortie de comparaison lorsque le niveau de la sortie d'addition excède la valeur de seuil prédéterminée.

5. Un appareil de mesure de distance selon la revendication 1, caractérisé en ce que ledit moyen générateur de signaux de projection de lumière engendre le signal de projection de lumière dans lequel l'allure de croissance du niveau croît progressivement depuis l'instant d'origine de la génération du signal de projection de lumière.

6. Un appareil de mesure de distance selon la revendication 3, caractérisé par
un moyen additionneur (11) pour additionner les sorties de courants obtenues du dispositif sensible à la position; et en ce que
ledit moyen comparateur (41) compare à la valeur de seuil prédéterminée une sortie d'addition du moyen additionneur et engendre la sortie de comparaison lorsque le niveau de la sortie d'addition excède ladite valeur de seuil prédéterminée; et
ledit moyen détecteur (13, 14, 40) de signal de position produit le signal lié a la position de l'objet, sur la base d'une répartition des sorties de courants qui sont obtenues du dispositif sensible à la position, en envoyant lesdites sorties de courants à un circuit diviseur (40).

7. Un appareil de mesure de distance selon la revendication 2, caractérisé en ce que
ledit moyen comparateur (41) compare à la valeur de seuil prédéterminée l'une ou l'autre des sorties de courants obtenues du dispositif sensible à la position et engendre la sortie de comparaison lorsque la sortie de courant excède la valeur de seuil prédéterminée;
ledit moyen générateur de signaux de projection de lumière engendre un signal de projection de lumière dans lequel l'allure de croissance du niveau croit progressivement depuis l'instant d'origine de la génération du signal de projection de lumière; et
un circuit diviseur (40) calcule un rapport entre les courants de sortie du dispositif sensible à la position qui sont obtenus à un instant où la projection de lumière est arrêtée.

8. Un appareil de mesure de distance selon la revendication 4, caractérisé en ce que
ledit moyen générateur de signaux de projection de lumière engendre un signal de projection de lumière dans lequel l'allure de croissance du niveau croît progressivement depuis l'instant d'origine de la génération du signal de projection de lumière;
un moyen de commande (42) de projection de lumière arrête la projection de lumière par le moyen projecteur de lumière lorsque la sortie de comparaison est engendrée par le moyen de comparaison; et
un circuit diviseur (40) produit un signal lié à une position de l'objet sur la base d'un rapport entre la sortie d'addition du moyen additionneur et l'une ou l'autre des sorties de courants du dispositif sensible à la position.
